# EUROPÄISCHE PATENTSCHRIFT

(11) **EP 2 079 617 B1**
(45) Veröffentlichungstag und Bekanntmachung des Hinweises auf die Patenterteilung: **09.11.2011**
(21) Anmeldenummer: 07803320.6
(22) Anmeldetag: 07.09.2007
(51) Int. Cl.: B60S 1/38

(54) **WISCHBLATT**
WIPER BLADE
BALAI D'ESSUIE-GLACE

(30) Priorität: 09.10.2006 DE 102006047633
(43) Veröffentlichungstag der Anmeldung: 22.07.2009
(73) Patentinhaber: Robert Bosch GmbH, 70442 Stuttgart (DE)
(72) Erfinder: JANSSIS, Yves, 3800 Sint-Truiden (BE); HERINCKX, Dirk, 3350 Drieslinter (BE); VAN BAELEN, David, 3020 Winksele (BE); AZNAG, Mohamed, 3271 Scherpenheuvel-Zichem (BE)
(86) Internationale Anmeldenummer: PCT/EP2007/059366
(87) Internationale Veröffentlichungsnummer: WO 2008/043622

(56) Entgegenhaltungen:
- WO-A-2006/049437
- DE-A1- 10 120 467

## Beschreibung

### Stand der Technik

Die Erfindung geht von einem Wischblatt nach dem Oberbegriff des Anspruchs 1 aus.

Aus der DE 101 20 467 A1 ist ein Wischblatt mit einer Wischleiste bekannt, dessen Kopfleiste zwei seitliche Längsnuten aufweist. Diese dienen zur Aufnahme zweier Federschienen, die als Tragelemente dienen, und auf denen ein zweiteiliger Spoiler mit Führungsschienen befestigt ist. Die Spoilerteile haben jeweils zwei aus verschiedenen Materialien bestehende Längsbereiche, und zwar ist der Längsbereich, welcher die hauptsächlichen Aufgaben des Spoilers mit der Anströmfläche übernimmt, aus einem weicheren Material gefertigt als der Längsbereich, der als Grundkörper dient und mit den Führungsschienen die äußeren Teile der Federschienen umfasst. Um die Formstabilität der Spoilerteile zu erhöhen, sind die Führungsschienen durch Stützmittel in Form einer Wand miteinander verbunden. Die Spoilerteile werden in Längsrichtung relativ zu den Federschienen durch Endkappen fixiert, die auf die Enden der Federschienen aufgeklippst sind. Der Zweistoffspoiler kann mit dem so genannten Mehrstoff-Extrusionsverfahren hergestellt werden.

Aus der DE 100 44 913 A1 ist ein ähnliches Wischblatt mit einem zweiteiligen Spoiler bekannt. Die zur Fahrzeugscheibe weisende Flanke der Führungsschiene wird von Klauen gebildet, die die Federschienen umfassen. Die Klauen, die über die Länge der Führungsschienen mit einem Abstand zueinander verteilt sind und mit den Federschienen verklebt werden, sind so gestaltet, dass die Spoilerteile quer zur Längsrichtung des Wischblatts auf die Federschienen geklippst werden können. Nach einer Ausführung werden die Spoilerteile im Spritzgießverfahren hergestellt und besitzen an den Wischblattenden eine integrierte Abschlusswand.

Ferner ist aus der DE 198 01 058 A1 ein Wischblatt in Flachbalkenbauweise bekannt, dessen bandartig lang gestreckte Federschiene von einer Kunststoffumhüllung umgeben ist. An dieser ist ein Spoilerprofil angeformt. Um die Elastizität der Federschiene nicht zu beeinträchtigen, besitzen die Kunststoffumhüllung und das Spoilerprofil Querschlitze, die von den äußeren Deckwänden bis in den Bereich der Federschiene verlaufen.

Die Kunststoffumhüllung mit dem Spoilerprofil ist im mittleren Bereich geteilt. Die Teile werden bei der Montage von den Enden über die Federschiene gestreift und an den Stoßstellen miteinander verbunden, z.B. durch Kleben, Schweißen oder dgl. Bei einer Ausgestaltung ist an einem der Umhüllungsteile an dem dem anderen Umhüllungsteil zugewandten Ende ein Anschlusselement angeformt. Dieses besitzt eine Rastnase, die mit einer Öse am Ende des anderen Umhüllungsteils eine Klippverbindung bildet.

Eine ältere Patentanmeldung nach Art. 54(3) EPÜ, die WO 2008/019903, zeigt ein Wischblatt mit einem Tragelement, das mindestens eine Federschiene aufweist und seitlich ein Stück weit über die Kontur einer Wischleiste vorsteht, wobei ein zweiteiliger Spoiler mittels Führungsschienen auf den vorstehenden Teilen des Tragelements geführt ist. Die Führungsschienen der Spoilerteile besitzen an den einander zugewandten Enden Verlängerungen, die an ihren Stirnseiten aneinander liegen und jeweils mindestens einen Nocken aufweisen. Die Nocken werden von einer zur Wischleiste hin offenen Aussparung umfasst, die an einem Verbindungsteil vorgesehen ist, das die Verlängerungen auf der der Wischleiste abgewandten Seite überdeckt. Die Nocken grenzen unmittelbar an eine Trennfuge an, die von den Stirnseiten der Verlängerungen gebildet wird. Dabei ist das Verbindungsteil ein Anschlusselement zum gelenkigen Verbinden des Wischblatts mit einem Wischarm. Das Anschlusselement weist an seinen Stirnseiten Rasthaken auf, die in montiertem Zustand in entsprechende Fenster an den Stirnseiten von Anschlussprofilen der Spoilerteile eingreifen und das Anschlusselement in seiner Endposition verriegeln. Die Spoilerteile besitzen ein zu einer Längsmittelebene symmetrisch aufgebautes Querschnittprofil.

### Offenbarung der Erfindung

Die Führungsschienen der Spoilerteile besitzen an den aneinander zugewandten Enden Verlängerungen, die an ihren Stirnseiten aneinander liegen und sich somit in Längsrichtung gegenseitig abstützen. Jedes Spoilerteil weist mindestens einen Nocken auf, wobei mindestens zwei Nocken verschiedener Spoilerteile gemeinsam von einer zur Wischleiste hin offenen Aussparung umfasst werden, die an einem Verbindungsteil vorgesehen ist. Das Verbindungsteil überdeckt die Verlängerungen der Führungsschienen auf der der Wischleiste abgewandten Seite. Durch die Nocken und die Aussparung werden die Spoilerteile in Längsrichtung zusammengehalten.

Gemäß der Erfindung wird vorgeschlagen, dass die Spoilerteile im Spritzgießverfahren aus zwei unterschiedlichen Kunststoffen hergestellt sind, wobei ein Grundelement aus einem härteren Kunststoff besteht als ein mit dem Grundelement verbundenes Spoilerelement. Das Grundelement umfasst zweckmäßigerweise die zwei Führungsschienen, die an einem Ende durch eine integrierte Endkappe und im Bereich des anderen Endes durch ein Anschlussprofil miteinander verbunden sind. Das Grundelement gibt dem Spoilerteil die notwendige Festigkeit und Formsteifigkeit, um es sicher auf den Federschienen zu führen, ohne die Federeigenschaften der Federschienen nennenswert zu beeinträchtigen. Der weichere Kunststoff für das Spoilerelement besitzt eine ausreichende Elastizität, um den Bewegungen der Federschienen folgen zu können, ohne große Spannungen zu erzeugen. Die Endkappen, die ein geschlossenes Ende besitzen, sorgen gleichzeitig für eine Fixierung der Spoilerteile in Längsrichtung, sobald diese durch das Verbindungsteil miteinander verbunden sind.

Die Nocken können an beliebigen geeigneten Stellen der Verlängerung vorgesehen werden. Zweckmäßigerweise sind sie an den Seiten der Verlängerungen angeordnet, während sich die entsprechenden Aussparungen in den Seitenwänden des Verbindungsteils befinden, wobei die Seitenwände des Verbindungsteils die Seitenwände der Verlängerung übergreifen. In vorteilhafter Weise grenzen die Nocken unmittelbar an einer Trennfuge an, die von den Stirnseiten der Verlängerungen gebildet wird. Dadurch können die Kontaktflächen der Nocken zur Abstützung beitragen und die Aussparungen klein gehalten werden. Die Nocken können auch an einer Brücke angeordnet sein, die zur Verbesserung der Formsteifigkeit die Verlängerungen eines jeden Spoilerteils miteinander verbindet.

Das Verbindungsteil kann als separates Bauteil und aus Blech oder Kunststoff hergestellt sein, es kann aber auch in ein Anschlusselement zur gelenkigen Verbindung des Wischblatts mit einem Wischarm integriert werden und mit diesem ein Bauteil bilden.

Gleichgültig, ob das Verbindungsteil ein separates Bauteil oder in einem Anschlusselement integriert ist, besitzt es Mittel, um es in seiner Endposition entgegen der Montagerichtung zu verriegeln. Hierzu dienen Laschen an den Stirnseiten des Verbindungsteils, die federnd oder unter plastischer Verformung in entsprechende Fenster an den Stirnseiten von Anschlussprofilen der Spoilerteile eingreifen. Die zweite Alternative eignet sich besonders für Verbindungsteile aus Blech, bei denen bei der Montage die Laschen in die entsprechenden Fenster gedrückt werden. Das montierte separate Verbindungsteile wird abschließend von einem Anschlusselement abgedeckt, das mit Klippsen und/oder Krallen am Wischblatt befestigt wird und im Wesentlichen bündig an die Konturen der Spoilerteile anschließt.

Bildet das Verbindungsteil mit dem Anschlusselement eine Baueinheit, wird diese in der Regel in einem Spritzgießverfahren aus Kunststoff gefertigt. Ein solches Verbindungsteil besitzt an seinen Stirnseiten Federzungen, die durch jeweils zwei zur Wischleiste hin offene Schlitze gebildet werden. Am Ende der Federzunge ist ein Rasthaken angeordnet, der bei der Montage in ein entsprechendes Fenster der Spoilerteile einrastet. Zur besseren Führung und Abstützung des Verbindungsteils bzw. Anschlusselements haben die einander zugewandten Stirnseiten der Anschlussprofile der Spoilerteile Führungsrippen, die in die Schlitze seitlich der Federzunge eingreifen.

Zur Vormontage und stabilen Verbindung der Spoilerteile ist es zweckmäßig, dass die Verlängerungen der Spoilerteile im Bereich der Trennfuge Rasthaken aufweisen, die entsprechende Vorsprünge des jeweils anderen Spoilerteils hintergreifen und so eine Klippverbindung bilden. Die Spoilerteile können somit von den Enden der Federschienen auf das Wischblatt geschoben werden oder quer zur Längsrichtung auf die Federschienen geklippst werden, wobei zum Schluss durch eine geringfügige Längsverschiebung die Klippverbindung einrastet.

Zur Querversteifung der Führungsschienen sind diese zwischen der Endkappe und dem Anschlussprofil durch Brücken miteinander verbunden, die in Abständen zueinander angeordnet sind. Die Brücken übergreifen die Wischleiste, die zwischen den Federschienen gehalten ist.

Die Spoilerteile können auch auf einer anderen Weise in Längsrichtung fixiert werden. So können sie im mittleren Bereich von einer Kappe überlappt und im Bereich einer Anschlusskontur der Kappe festgeklemmt sein. Bei einer anderen Ausführung mit einer Blechkralle, die mittels Befestigungskrallen an der Federschiene befestigt ist, sind an den Befestigungskrallen in Längsrichtung Haltekrallen angeformt, die bei der Montage von außen gegen die Führungsschiene gepresst werden, sodass die Enden der Führungsschienen des Spoilerteils zwischen den Haltekrallen und der Federschiene fixiert sind. Eine einfache Möglichkeit besteht ferner darin, dass die Spoilerteile im Bereich eines Endes gegenüber der Wischleiste bzw. der Federschiene in Längsrichtung durch eine Klammer, durch Schweißen, z.B. Ultraschallschweißen oder Laserstrahlschweißen, oder durch Kleben fixiert sind. Diese Arten der Fixierung eignen sich auch für Spoilerteile mit separaten Endkappen.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

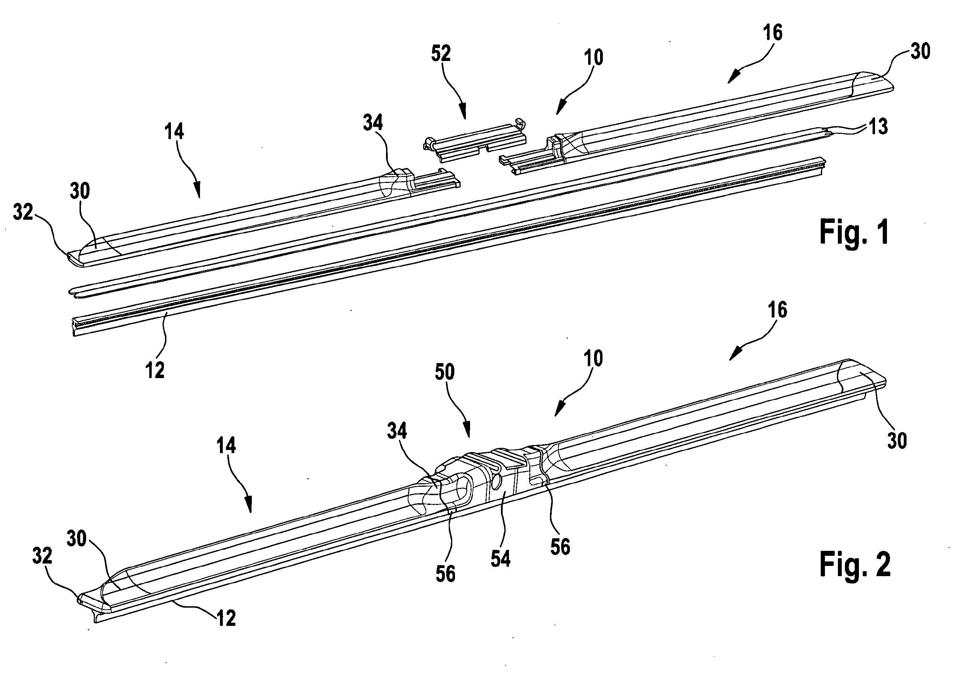

- Fig. 1: eine perspektivische Explosionsdarstellung eines Wischblatts in gestreckter Lage,
- Fig. 2: eine perspektivische Darstellung eines Wischblatts nach Fig. 1 in montiertem Zustand,

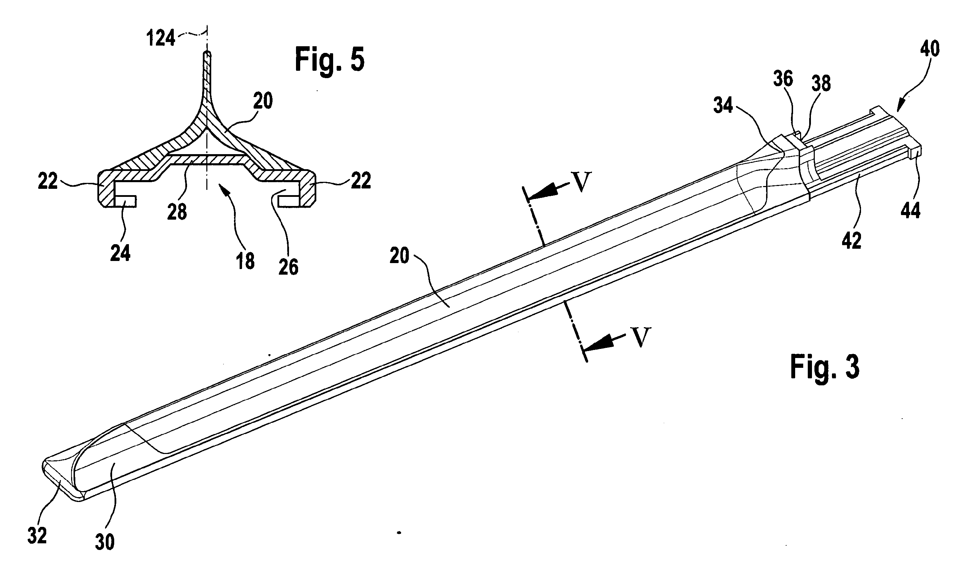

- Fig. 3: eine perspektivische Darstellung eines Spoilerteils,

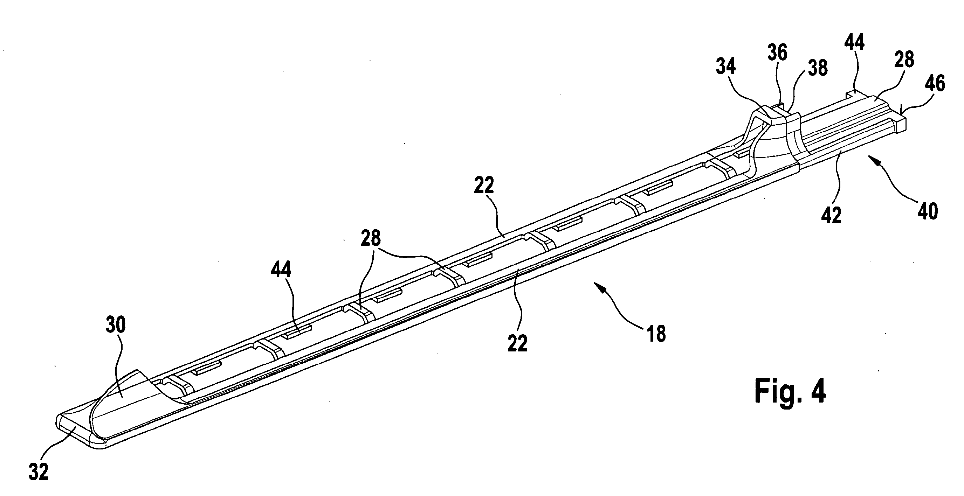

- Fig. 4: eine perspektivische Darstellung eines Grundelements eines Spoilerteils nach Fig. 3,
- Fig. 5: einen Schnitt entsprechend der Linie V-V in Fig. 3,

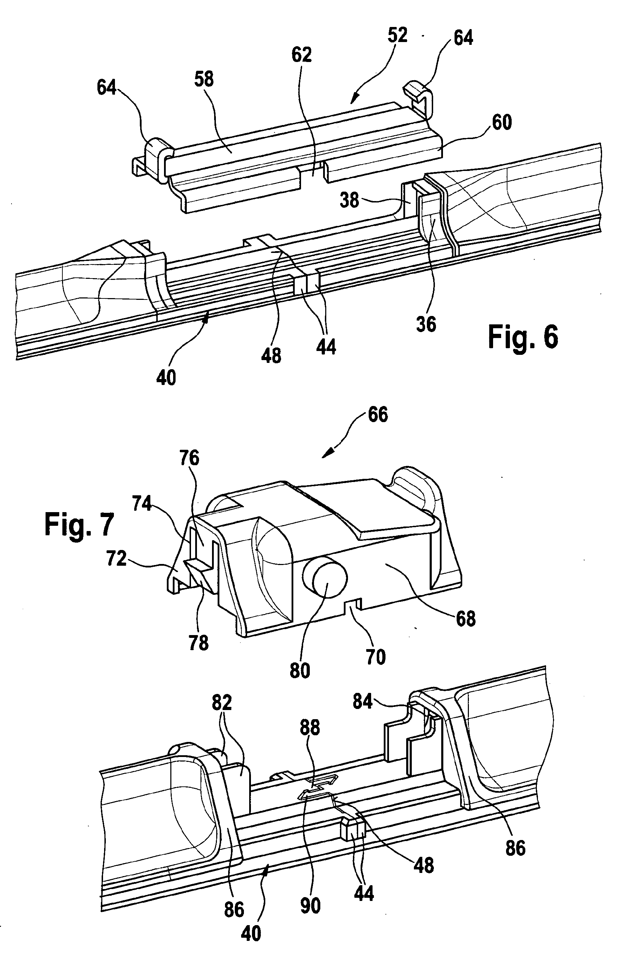

- Fig. 6: einen mittleren Teil eines Wischblatts nach Fig. 1,
- Fig. 7: eine Variante zu Fig. 6,
- Fig. 8: bis Fig. 11 eine Variante mit einer Blechkralle und

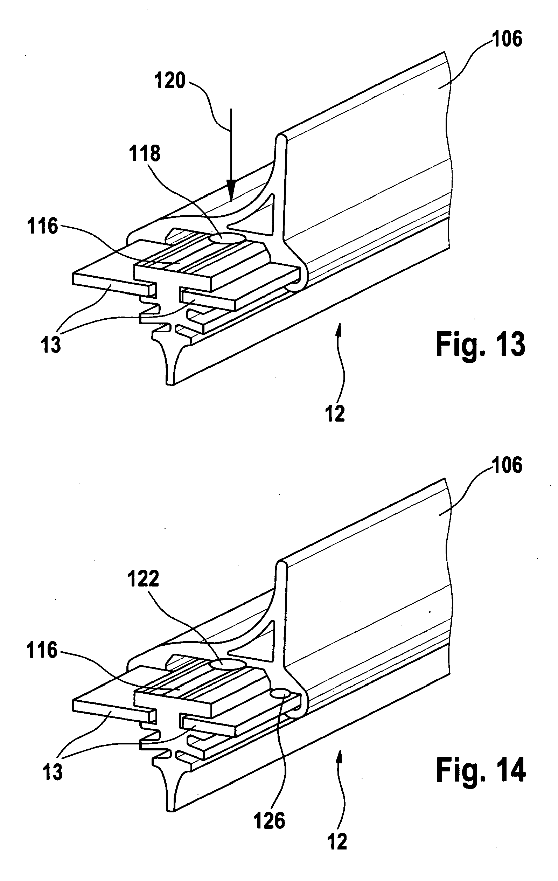

- Fig. 12 bis Fig. 14: Varianten zur axialen Fixierung eines Endes eines Spoilerteils.

### Ausführungsformen der Erfindung

Ein Wischblatt 10 ist im Wesentlichen aus einer Wischleiste 12, zwei Federschienen 13, zwei Spoilerteilen 14, 16, einem Verbindungsteil 52 und einem Anschlusselement 50 zum gelenkigen Verbinden mit einem nicht dargestellten Wischarm aufgebaut. Die Federschienen 13 liegen in zwei seitlichen Längsnuten der Wischleiste 12 und ragen ein Stück weit aus den Längsnuten seitlich vor, sodass die Spoilerteile 14, 16 mit ihren Führungsschienen 22 von den Enden der Federschienen 13 auf diese aufgeschoben oder quer zu ihnen aufgeklippst werden können. Die Führungsschienen 22 weisen ein zu den Federschienen 13 hin offenes, u-förmiges Querschnittprofil mit einer Führungsnut 26 auf, wobei der untere Schenkel der Führungsnut 26 von Klauen 24 gebildet wird, die über die Länge der Führungsnut 26 verteilt mit einem Abstand zueinander angeordnet sind.

Die Spoilerteile 14, 16 sind in einem Spritzgießverfahren als Zweistoffbauteile aus Kunststoff hergestellt, wobei ein Grundelement 18 die Führungsschienen 22 mit einer integrierten Endkappe 30 und einem Anschlussprofil 34 umfasst. Die Endkappe 30, die an ihrem äußeren Ende 32 geschlossen ist, und das Anschlussprofil 34 verbinden die beiden Führungsschienen des jeweiligen Spoilerteils 14, 16. Zur Querversteifung des Grundelements 18 sind zwischen der Endkappe 30 und dem Anschlussprofil 34 Brücken 28 über die Länge der Führungsschiene 22 verteilt an diese angeformt. Sie überbrücken die Wischleiste 12. Ein Spoilerelement 20 aus einem weicheren Kunststoff, vorzugsweise einem thermoplastischen Elastomer schließt sich an die Endkappe 30 und das Anschlussprofil 34 harmonisch an. Das Querschnittprofil des Spoilerteils ist zu einer Längsmittelebene 124 symmetrisch gestaltet, sodass die Spoilerteile 14 und 16 eines Wischblatts 10 und für Wischblätter von Rechtslenker- oder Linkslenkerfahrzeugen gleich sind.

Die Spoilerteile 14, 16 können auch aus einem Werkstoff hergestellt werden. Zweckmäßigerweise besitzen sie dann quer zur Längsrichtung verlaufende Einschnitte, die von der Oberkante des Spoilerelements 20 bis in den Bereich der Führungsschienen 22 reichen. Durch die Einschnitte, deren Abstände voneinander zu den Enden hin zweckmäßigerweise kleiner werden, wird die Flexibilität der Spoilerteile 14, 16 verbessert, sodass die Federeigenschaften der Federschienen 13 durch den Spoiler 14, 16 kaum beeinträchtigt werden.

Die Führungsschienen 22 der Spoilerteile 14, 16 besitzen Verlängerungen 40, die über das Anschlussprofil 34 hinausragen. Sie sind zur Querversteifung ebenfalls durch eine Brücke 28 miteinander verbunden. In Richtung der Verlängerungen 40 besitzen die Anschlussprofile 34 Führungswände 36 für ein Anschlusselement 50 mit einer Kappe 54, die den Zwischenraum zwischen den Anschlussprofilen 34 bündig abschließt und durch Krallen 56 an den Verlängerungen 40 befestigt ist.

Die Verlängerungen 40 der Spoilerteile 14, 16 liegen mit ihren Stirnseiten 46 im montierten Zustand aneinander und bilden somit eine Trennfuge 48. Im Bereich der Trennfuge 48 sind an Seitenwände 42 der Verlängerungen 40 vorstehende Nocken 44 angeordnet. Jeweils ein Nocken 44 des Spoilerteils 14 und ein Nocken 44 des Spoilerteils 16 werden durch eine Aussparung 62 an einem Verbindungsteil 52 gemeinsam umfasst und somit in Längsrichtung zusammengehalten. Das Verbindungsteil 52 weist zwei Seitenwände 60 auf, in denen die Aussparungen 62 angeordnet sind, und einen Boden 58, der die Seitenwände 60 miteinander verbindet. Die Innenseiten der Seitenwände 60 sind auf den Außenseiten der Seitenwände 42 der Verlängerungen 40 geführt.

Ferner besitzt das Verbindungsteil 52 an den Stirnseiten des Bodens 58 Laschen 64, die in Fenster 38 zwischen den Führungswänden 36 der Anschlussprofile 34 eingreifen. Dies kann **dadurch geschehen, dass** die Laschen 64 bei der Montage federnd nach innen nachgeben und in der Endposition in die Fenster einrasten. Ist das Verbindungsteil 52 aus Blech hergestellt, werden die Laschen 64 bei der Montage in die Fenster 38 gedrückt, indem sich die Biegestellen plastisch verformen. In beiden Fällen wird das Verbindungsteil 52 entgegen der Montagevorrichtung verriegelt, sodass die beiden Spoilerteile 14, 16 dauerhaft miteinander verbunden sind.

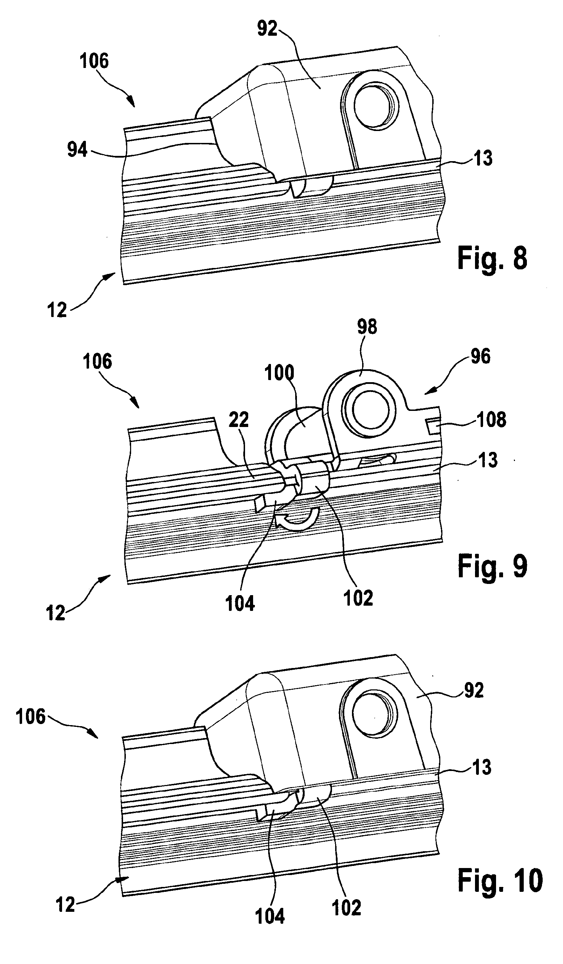

Bei der Ausführung nach Fig. 8 besitzen die Verlängerungen 40 im Bereich der Trennfuge 48 Rasthaken 90, die im montierten Zustand entsprechende Vorsprünge 88 des jeweils anderen Spoilerteils 14, 16 hintergreifen. Dadurch werden die Spoilerteile 14, 16 bereits vor der Montage eines Verbindungsteils 66 zusammengehalten. Das Verbindungsteil 66 ist als Anschlusselement gestaltet. Es besitzt ein Lagerelement 80 in Form einer Nabe oder eines Lagerzapfens. In seinen Seitenwänden 68 sind am unteren Rand Aussparungen 70 vorgesehen, die im montierten Zustand die seitlichen Nocken 44 der Verlängerungen 40 übergreifen.

In den den Anschlussprofilen 86 der Spoilerteile 14, 16 zugewandten Stirnwänden 72 des Verbindungsteils 66 sind Federzungen 76 mit Rasthaken 78 vorgesehen, die bei der Montage in entsprechende Fenster 84 der Anschlussprofile 86 einrasten. Die Federzungen 76 werden durch Schlitze 74 gebildet, die in Richtung auf die Wischleiste 12 zu offen sind. Das Verbindungsteil 66 wird außerdem an Führungsrippen 82 geführt, die an den Anschlussprofilen 86 stirnseitig angebracht sind und in die Schlitze 74 des Verbindungsteils 66 eingreifen. Nach der Montage des Verbindungsteils 66 kann dieses nicht mehr zerstörungsfrei demontiert werden.

Die Ausführung nach Fig. 8 bis 10 zeigt ein Wischblatt 10 mit einer Blechkralle 96, zwischen deren Seitenwände 98 ein Lagerteil 100 in Form einer Nabe oder eines Lagerbolzens vorgesehen ist. Die Blechkralle 96 wird von einer Kappe 92 überdeckt, die mit Rasthaken 110 in Fenstern 108 der Seitenwände 98 einrastet. Die Spoilerenden 106 der Spoilerteile 14, 16 werden in Längsrichtung von der Kappe 92 überdeckt und im Bereich einer Anschlusskontur 94 der Kappe 92 eingeklemmt.

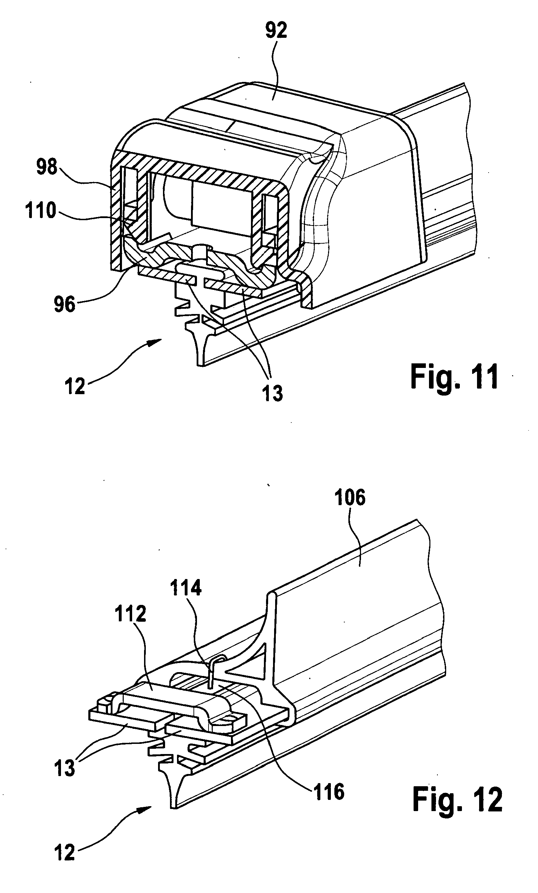

Die Blechkralle 96 ist mit Befestigungskrallen 102 an den Federschienen 13 befestigt, wobei an den Befestigungskrallen 102 in Längsrichtung des Wischblatts 10 Haltekrallen 104 angeformt sind, die die Führungsschienen 22 der Spoilerenden 106 gegen die Federschienen 13 drücken und somit in Längsrichtung fixieren. Bei der Ausführung nach Fig. 12 sind die Federschienen 13 an ihrem Ende durch eine Brücke 112 miteinander verbunden. Die Brücke 112 kann gleichzeitig zur Sicherung einer separaten, nicht dargestellten Endkappe dienen. Das Ende 106 des Spoilerteils 14 ist in Längsrichtung durch eine Klammer 114, die von der Außenseite des Spoilerteils 14 in eine Rückenleiste 116 der Wischleiste 12 eindringt in Längsrichtung gesichert. Anstatt durch eine Klammer 114 können die Spoilerteile 14, 16 auch durch eine Schweißstelle oder Klebepunkte 122, 126 zwischen der Spoilerinnenseite und der Rückenleiste 116 oder den Federschienen 13 in Längsrichtung relativ zur Wischleiste 12 fixiert werden. Als Schweißverfahren eignen sich Ultraschall- oder Laserschweißverfahren, die in Richtung eines Pfeils 120 auf die Bauteile 106, 12 und 13 wirken. Die Schweißstelle ist mit 118 gekennzeichnet.

## Patentansprüche

1. Wischblatt (10) mit einem Tragelement (13), das mindestens eine Federschiene aufweist und seitlich ein Stück weit über die Kontur einer Wischleiste (12) vorsteht, wobei ein zweiteiliger Spoiler (14, 16) mittels Führungsschienen (22) auf den vorstehenden Teilen des Tragelements (13) geführt ist und die Führungsschienen (22) der Spoilerteile (14, 16) an den einander zugewandten Enden Verlängerungen (40) besitzen, die an ihren Stirnseiten (46) aneinander liegen und jeweils mindestens einen Nocken (44) aufweisen, die gemeinsam von einer zur Wischleiste (12) hin offenen Aussparung (62, 70) umfasst werden, die an einem Verbindungsteil (52, 66) vorgesehen ist, das die Verlängerungen (40) auf der der Wischleiste (12) abgewandten Seite überdeckt, wobei die Spoilerteile (14, 16) im Spritzgießverfahren aus zwei unterschiedlichen Kunststoffen hergestellt sind, wobei ein Grundelement (18) aus einem härteren Kunststoff besteht als ein mit dem Grundelement (18) fest verbundenes Spoilerelement (20).

2. Wischblatt (10) nach Anspruch 1, **dadurch gekennzeichnet, dass** das Grundelement (18) die zwei Führungsschienen (22) umfasst, die an einem Ende durch eine integrierte Endkappe (30) und im Bereich des anderen Endes durch das Anschlussprofil (34, 86) miteinander verbunden sind.

3. Wischblatt (10) nach Anspruch 1, **dadurch gekennzeichnet, dass** die Nocken (44) an Seitenwänden (42) der Verlängerungen (40) und die Aussparungen (62, 70) an Seitenwänden (60, 68) des Verbindungsteils (52, 66) angeordnet sind.

4. Wischblatt (10) nach Anspruch 1 oder 2, **dadurch gekennzeichnet, dass** die Nocken (44) unmittelbar an einer Trennfuge (48) angrenzen, die von den Stirnseiten (46) der Verlängerungen (40) gebildet wird.

5. Wischblatt (10) nach einem der vorhergehenden Ansprüche, **dadurch gekennzeichnet, dass** die Verlängerungen (40) eines jeden Spoilerteils (14, 16) durch eine Brücke (28) verbunden sind.

6. Wischblatt (10) nach einem der vorhergehenden Ansprüche, **dadurch gekennzeichnet, dass** das Verbindungsteil (66) ein Anschlusselement zum gelenkigen Verbinden des Wischblatts (10) mit einem Wischarm ist.

7. Wischblatt (10) nach einem der vorhergehenden Ansprüche, **dadurch gekennzeichnet, dass** das Verbindungsteil (52, 66) an seinen Stirnseiten Laschen (64) bzw. Rasthaken (78) aufweist, die im montierten Zustand in entsprechende Fenster (38, 84) an den Stirnseiten von Anschlussprofilen (34, 86) der Spoilerteile (14, 16) eingreifen und das Verbindungsteil (52, 66) in seiner Endposition verriegeln.

8. Wischblatt (10) nach Anspruch 7, **dadurch gekennzeichnet, dass** das Verbindungsteil (52) aus Blech gefertigt ist und seine Laschen bei der Montage unter plastischer Verformung in die Fenster (38) gedrückt werden.

9. Wischblatt (10) nach Anspruch 7 oder 8, **dadurch gekennzeichnet, dass** das Verbindungsteil (52) von einem Anschlusselement (50) überdeckt ist.

10. Wischblatt (10) nach Anspruch 7, **dadurch gekennzeichnet, dass** das Verbindungsteil (66) an seinen Stirnseiten Federzungen (76) besitzt, die zwischen zwei zur Wischleiste (12) hin offene Schlitze (74) gebildet ist, an deren freien Enden die Rasthaken (78) angeordnet sind.

11. Wischblatt (10) nach Anspruch 10, **dadurch gekennzeichnet, dass** die einander zugewandten Stirnseiten der Anschlussprofile (86) der Spoilerteile (14, 16) Führungsrippen (82) haben, die in die Schlitze (74) des Verbindungsteils (66) eingreifen.

12. Wischblatt (10) nach einem der vorhergehenden Ansprüche, **dadurch gekennzeichnet, dass** die Verlängerungen (40) der Spoilerteile (14, 16) im Bereich der Trennfuge (48) Rasthaken (90) aufweisen, die entsprechende Vorsprünge (88) des jeweils anderen Spoilerteils (14, 16) hintergreifen und so eine klippverbindung bilden.

13. Wischblatt (10) nach Ansprüch 2, **dadurch gekennzeichnet, dass** die Führungsschienen (22) zwischen der Endkappe (30) und dem Anschlussprofil (34) durch Brücken (28) miteinander verbunden sind, die in Abständen zueinander angeordnet sind.

14. Wischblatt (10) nach einem der vorhergehenden Ansprüche, **dadurch gekennzeichnet, dass** das Querschnittprofil der Spoilerteile (14, 16) zu einer Längsmittelebene (124) symmetrisch aufgebaut ist.

15. Wischblatt (10) nach dem Oberbegriff von Anspruch 1, **dadurch gekennzeichnet, dass** die Spoilerteile (14, 16) im mittleren Bereich von einer Kappe (92) überlappt sind und im Bereich einer Anschlusskontur (94) der Kappe (92) fest geklemmt sind.

16. Wischblatt (10) nach dem Oberbegriff von Anspruch 1 mit einer Blechkralle (96), die mittels Befestigungskrallen (102) an der Federschiene (13) befestigt ist, **dadurch gekennzeichnet, dass** an den Befestigungskrallen (102) in Längsrichtung Haltekrallen (104) angeformt sind, die bei der Montage von außen gegen die Führungsschienen (22) gepresst werden, sodass die Enden der Führungsschienen (22) der Spoilerteile (14, 16) zwischen den Haltekrallen (104) und den Federschienen (13) fixiert sind.

17. Wischblatt (10) nach einem der vorhergehenden Ansprüche, **dadurch gekennzeichnet, dass** die Spoilerteile (14, 16) im Bereich eines Endes (106) gegenüber der Wischleiste (12) bzw. der Federschiene (13) durch Klammern, Schweißen oder Kleben in Längsrichtung fixiert sind.

## Claims

1. Wiper blade (10) with a supporting element (13) which has at least one spring rail and protrudes laterally for a distance beyond the contour of a wiper strip (12), wherein a two-part spoiler (14, 16) is guided on the protruding parts of the supporting element (13) by means of guide rails (22), and the mutually facing ends of the guide rails (22) of the spoiler parts (14, 16) have extensions (40) which bear against each other on the end sides (46) thereof and each has at least one cam (44), said cams being jointly enclosed by a cutout (62, 70) which is open towards the wiper strip (12) and is provided on a connecting part (52, 66) which covers the extensions (40) on the side facing away from the wiper strip (12), wherein the spoiler parts (14, 16) are produced from two different plastics by injection moulding, wherein a base element (18) consists of a harder plastic than a spoiler element (20) which is fixedly connected to the base element (18).

2. Wiper blade (10) according to Claim 1, **characterized in that** the base element (18) comprises the two guide rails (22) which are connected to each other at one end by an integrated end cap (30) and in the region of the other end by the connecting profile (34, 86).

3. Wiper blade (10) according to Claim 1, **characterized in that** the cams (44) are arranged on side walls (42) of the extensions (40) and the cutouts (62, 70) are arranged on side walls (60, 68) of the connecting parts (52, 66).

4. Wiper blade (10) according to Claim 1 or 2, **characterized in that** the cams (44) are directly adjacent to a separating joint (48) which is formed by the end sides (46) of the extensions (40).

5. Wiper blade (10) according to one of the preceding claims, **characterized in that** the extensions (40) of each spoiler part (14, 16) are connected by a bridge (28).

6. Wiper blade (10) according to one of the preceding claims, **characterized in that** the connecting part (66) is a connecting element for the articulated connection of the wiper blade (10) to a wiper arm.

7. Wiper blade (10) according to one of the preceding claims, **characterized in that** the end sides of the connecting part (52, 66) have tabs (64) and latching hooks (78), respectively, which, in the fitted state, engage in corresponding apertures (38, 84) on the end sides of connecting profiles (34, 86) of the spoiler parts (14, 16) and lock the connecting part (52, 66) in the end position thereof.

8. Wiper blade (10) according to Claim 7, **characterized in that** the connecting part (52) is produced from sheet metal and, during installation, the tabs thereof are pressed into the aperture (38) under plastic deformation.

9. Wiper blade (10) according to Claim 7 or 8, **characterized in that** the connecting part (52) is covered by a connecting element (50).

10. Wiper blade (10) according to Claim 7, **characterized in that** the end sides of the connecting part (66) have spring tongues (76) which are formed between two slots (74) which are open towards the wiper strip (12) and on the free ends of which the latching hooks (78) are arranged.

11. Wiper blade (10) according to Claim 10, **characterized in that** the mutually facing end sides of the connecting profiles (86) of the spoiler parts (14, 16) have guide ribs (82) which engage in the slots (74) of the connecting part (66).

12. Wiper blade (10) according to one of the preceding claims, **characterized in that** the extensions (40) of the spoiler parts (14, 16) in the region of the separating joint (48) have latching hooks (90) which engage behind corresponding projections (88) of the other spoiler part (14, 16) in each case and thus form a clip connection.

13. Wiper blade (10) according to Claim 2, **characterized in that** the guide rails (22) are connected to each other between the end cap (30) and the connecting profile (34) by bridges (28) which are arranged at distances from one another.

14. Wiper blade (10) according to one of the preceding claims, **characterized in that** the cross-sectional profile of the spoiler parts (14, 16) is constructed symmetrically with respect to a longitudinal central plane (124).

15. Wiper blade (10) according to the preamble of Claim 1, **characterized in that** the spoiler parts (14, 16) are overlapped in the central region by a cap (92) and are fixedly clamped in the region of a connecting contour (94) of the cap (92).

16. Wiper blade (10) according to the preamble of Claim 1, with a sheet-metal claw (96) which is fastened to the spring rail (13) by means of fastening claws (102), **characterized in that** retaining claws (104) are integrally formed on the fastening claws (102) in the longitudinal direction, said retaining claws being pressed from the outside against the guide rails (22) during installation such that the ends of the guide rails (22) of the spoiler parts (14, 16) are fixed between the retaining claws (104) and the spring rails (13).

17. Wiper blade (10) according to one of the preceding claims, **characterized in that** the spoiler parts (14, 16) are fixed in the region of one end (106) in the longitudinal direction in relation to the wiper strip (12) and the spring rail (13) by clamping, welding or adhesive bonding.

## Revendications

1. Raclette (10) avec un élément de support (13) comportant au moins un rail élastique, l'élément de support faisant légèrement saillie latéralement au-delà du contour d'une baguette d'essuyage (12), où un déflecteur en deux pièces (14, 16) est guidé sur les parties saillantes de l'élément de support (13) au moyen de rails de guidage (22), et les rails de guidage (22) des pièces de déflecteur (14, 16) possèdent des prolongements (40) aux extrémités tournées l'une vers l'autre, qui s'appliquent l'un contre l'autre par leurs faces frontales (46) et comportent chacun au moins un ergot (44), lesquels ergots sont entourés par un évidement (62, 70) ouvert vers la baguette d'essuyage (12), prévu sur une pièce de liaison (52, 66) recouvrant les prolongements (40) du côté détourné de la baguette d'essuyage (12), dans laquelle les pièces de déflecteur (14, 16) sont fabriquées par un procédé de moulage par injection avec deux matières plastiques distinctes, un élément de base (18) étant constitué d'une matière plastique plus dure qu'un élément de déflecteur (20) relié fixement à l'élément de base (18).

2. Raclette (10) selon la revendication 1, **caractérisée en ce que** l'élément de base (18) entoure les deux rails de guidage (22), qui sont reliés entre eux par un capuchon final intégré (30) au niveau d'une extrémité et par le profilé de raccordement (34, 86) dans la région de l'autre extrémité.

3. Raclette (10) selon la revendication 1, **caractérisée en ce que** les ergots (44) sont prévus sur des parois latérales (42) des prolongements (40), et les évidements (62, 70) sont prévus sur des parois latérales (60, 68) de la pièce de liaison (52, 66).

4. Raclette (10) selon la revendication 1 ou 2, **caractérisée en ce que** les ergots (44) avoisinent directement un joint de séparation (48) formé par les faces frontales (46) des prolongements (40).

5. Raclette (10) selon l'une des revendications précédentes, **caractérisée en ce que** les prolongements (40) de chacune des pièces de déflecteur (14, 16) sont reliés par un pont (28).

6. Raclette (10) selon l'une des revendications précédentes, **caractérisée en ce que** la pièce de liaison (66) est un élément de raccordement pour relier de façon articulée la raclette (10) à un bras de raclette.

7. Raclette (10) selon l'une des revendications précédentes, **caractérisée en ce que** sur ses faces frontales, la pièce de liaison (52, 66) comporte des pattes (64) ou des crochets de crantage (78) qui, à l'état monté, s'engagent dans des fenêtres correspondantes (38, 84) dans les faces frontales des profilés de raccordement (34, 86) des pièces de déflecteur (14, 16), et verrouillent la pièce de liaison (52, 66) dans sa position finale.

8. Raclette (10) selon la revendication 7, **caractérisée en ce que** la pièce de liaison (52) est réalisée en tôle, et ses pattes sont enfoncées dans les fenêtres (38) lors du montage, par déformation plastique.

9. Raclette (10) selon la revendication 7 ou 8, **caractérisée en ce que** la pièce de liaison (52) est recouverte par un élément de raccordement (50).

10. Raclette (10) selon la revendication 7, **caractérisée en ce que** sur ses faces frontales, la pièce de liaison (66) possède des langues élastiques (76) formées entre deux fentes (74) ouvertes vers la baguette d'essuyage (12), aux extrémités libres desquelles sont prévus les crochets de crantage (78).

11. Raclette (10) selon la revendication 10, **caractérisée en ce que** les faces frontales des profilés de raccordement (86) des pièces de déflecteur (14, 16), tournées l'une vers l'autre, possèdent des nervures de guidage (82) qui s'engagent dans les fentes (74) de la pièce de liaison (66).

12. Raclette (10) selon l'une des revendications précédentes, **caractérisée en ce que** dans la région du joint de liaison (48), les prolongements (40) des pièces de déflecteur (14, 16) comportent des crochets de crantage (90) venant en prise derrière des saillies correspondantes (88) de l'autre pièce de déflecteur respective (14, 16), formant ainsi une liaison par encliquetage.

13. Raclette (10) selon la revendication 2, **caractérisée en ce que** les rails de guidage (22) sont reliés l'un à l'autre, entre le capuchon final (30) et le profilé de raccordement (34), par des ponts (28) prévus de manière espacée entre eux.

14. Raclette (10) selon l'une des revendications précédentes, **caractérisée en ce que** la section transversale des pièces de déflecteur (14, 16) est conçue de manière à être symétrique par rapport à un plan médian longitudinal (124).

15. Raclette (10) selon le préambule de la revendication 1, **caractérisée en ce que** les pièces de déflecteur (14, 16) se chevauchent dans la région centrale d'un capuchon (92), tout en étant serrées fermement dans la région d'un contour extérieur (94) du capuchon (92).

16. Raclette (10) selon le préambule de la revendication 1, avec une griffe en tôle (96) fixée au rail élastique (13) à l'aide de griffes de fixation (102), **caractérisée en ce que** des griffes de maintien (104) sont façonnées dans le sens longitudinal sur les griffes de fixation (102), qui sont pressées depuis l'extérieur contre les rails de guidage (22) lors du montage, de sorte que les extrémités des rails de guidage (22) des pièces de déflecteur (14, 16) soient fixées entre les griffes de maintien (104) et les rails élastiques (13).

17. Raclette (10) selon l'une des revendications précédentes, **caractérisée en ce que** les pièces de déflecteur (14, 16) sont fixées dans le sens longitudinal par agrafage, soudage ou collage, dans la région d'une extrémité (106) en face de la baguette d'essuyage (12) ou du rail élastique (13) .
